# FASCICULE DE BREVET EUROPEEN

(11) **EP 1 819 221 B1**
(45) Date de publication et mention de la délivrance du brevet: **14.01.2009**
(21) Numéro de dépôt: 05824045.8
(22) Date de dépôt: 05.12.2005
(51) Int. Cl.: A01N 31/02

(54) **UTILISATION DU GLYCEROL COMME AGENT ANTI-MOUSSES ET/OU ANTI-LICHENS**
VERWENDUNG VON GLYCEROL ALS MOOS- UND FLECHTENSCHUTZMITTEL
USE OF GLYCEROL AS AN ANTI-MOSS AND/OR ANTI-LICHEN AGENT

(30) Priorité: 06.12.2004 FR 0412935
(43) Date de publication de la demande: 22.08.2007
(73) Titulaire: Fonds de Developpement des Filières des Oleagineux, 75008 Paris (FR)
(72) Inventeur: PARANT, Bernard, F-77330 Ozoir La Ferriere (FR)
(74) Mandataire: Hubert, Philippe
(86) Numéro de dépôt international: PCT/FR2005/051035
(87) Numéro de publication internationale: WO 2006/061535

(56) Documents cités:
- CA-A1- 2 136 036
- US-A- 4 652 393

## Description

La présente invention concerne l'utilisation du glycérol comme agent anti-mousses et/ou anti-lichens.

La présente invention concerne plus particulièrement l'utilisation du glycérol pour la préparation d'une composition destinée à éliminer les mousses/et ou les lichens.

La présente invention concerne enfin un procédé de traitement d'une surface recouverte de mousses et/ou de lichens, utilisant le glycérol.

Les lichens sont des végétaux chlorophylliens qui se développent sur divers supports comme en particulier le bois, la pierre, les tuiles et le verre. Leur formation résulte de la symbiose entre une algue unicellulaire et un champignon, le plus souvent ascomycète.

Les mousses sont de petits végétaux, de quelques centimètres de long, chlorophylliens, et vivant généralement dans des lieux humides et ombragés.

Ainsi, la présence de mousses et/ou de lichens sur les façades, les sols ou la base des murs, est souvent le signe d'humidité constante ou répétée.

Les lichens et les mousses sont susceptibles de coloniser de nombreux matériaux et peuvent nuire à l'intégrité des façades ou des sols par exemple, lorsqu'ils sont implantés depuis de très longues périodes.

Les mousses et/ou les lichens sont également rendus indésirables sur de nombreuses surfaces qui deviennent dangereuses et glissantes.

Peu nombreuses sont les solutions qui ont été proposées pour empêcher la prolifération des mousses et/ou des lichens ou au mieux les éliminer dans des conditions écotoxiques raisonnables.

Il existe plusieurs techniques de nettoyage des façades et/ou des sols bétonnés.

Les techniques les plus utilisées consistent probablement au nettoyage des surfaces utilisant la projection de liquides ou d'agents abrasifs sous pression ou encore l'application d'agents chimiques. La plupart de ces techniques sont dommageables pour l'intégrité du revêtement des surfaces traitées.

Les matières chimiques ordinairement employées pour nettoyer la maçonnerie sont très corrosives et souvent toxiques. Il peut être nécessaire d'employer des appareils spéciaux pour les appliquer et de se vêtir d'une combinaison protectrice durant l'application. De plus, leur utilisation nécessite la protection des autres parties du bâtiment, ainsi que des arbres et arbustes environnants.

L'élimination des recouvrements bio organiques que sont les mousses et les lichens peut-être encore obtenue à l'aide de produits chimiques anti-mousses ou lichénicides.

Cependant, la plupart des produits du commerce sont à base d'hypochlorite de sodium ou de sels d'ammonium quaternaire et peuvent être nocifs pour la surface traitée (accélération des phénomènes de corrosion), toxiques pour les pelouses et les plantes et également dangereux pour l'utilisateur (risque de brûlures).

Le nettoyage des façades peut être également réalisé par "arrachage" mécanique des produits les recouvrant. Ainsi, le document "Comparative study of cleaning techniques applied to ancient concrete" (Laboratoire de recherche des monuments historiques ; CAN 134 :241456 AN 2001 :90805) enseigne pour le nettoyage des façades l'utilisation du glycérol-polyvinyl alcool qui polymérise après application sur la surface à traiter, et permet un nettoyage mécanique par pelage du film polymérisé.

La question s'est donc posée de trouver un moyen permettant d'éliminer mousses et/ou lichens accumulés à la surface des murs, des toits et/ou des sols, sans altérer l'environnement et sans nuire à la surface traitée.

La demanderesse a découvert de manière surprenante que le glycérol possède une activité anti-mousses et/ou anti-lichens permettant de parvenir à cet objectif.

Le glycérol est un produit inodore, incolore, liquide et visqueux à température ambiante. De plus, il est particulièrement biodégradable dans une atmosphère humide.

Le glycérol est utilisé dans une multitude de produits pharmaceutiques, cosmétiques et industriels. Il est d'ailleurs lui-même un sous-produit de la fabrication des savons et bougies.

Le glycérol est employé, par exemple, comme agent assouplissant mais aussi comme retardateur du séchage pour différentes peintures à l'eau, ou encore comme lubrifiant.

Aucun document de l'état de la technique ne révèle ou ne suggère sa possible utilisation en tant qu'agent anti-mousses ou anti-lichens.

Il a donc été découvert, et ceci constitue le fondement de la présente invention, que le glycérol et les compositions en contenant présentent des effets anti-mousses et anti-lichens.

La présente demande vise à couvrir l'utilisation d'une composition aqueuse contenant de 20 % à 99 % en poids de glycérol en solution comme agent anti-mousses et/ou anti-lichens.

Ces compositions contiennent de préférence du glycérol technique à 65%.

Avantageusement, le pH de ces compositions est compris entre 5 et 9.

Afin d'améliorer l'efficacité du glycérol, par exemple son caractère mouillant, il est possible d'ajouter à la composition un agent tensioactif.

Le pouvoir mouillant d'un produit est sa capacité à s'étaler sur une surface.

L'agent tensioactif peut être choisi dans le groupe constitué des détergents non ioniques ou ioniques connus.

Les tensioactifs les plus actifs dans le cadre de l'invention sont avantageusement choisis parmi les alcools éthoxylés, en particulier le polyoxyéthylène 2-éthyl hexyl éther, le dioctylsulfosuccinate de sodium, le lauryl éther sulfate et les alkyls polyglucosides (chaîne en C₈).

Les compositions de la présente invention contiennent de préférence de 0,1 à 5 % en poids d'un agent tensioactif.

Selon un mode de réalisation particulier, les compositions de la présente invention sont caractérisées en ce qu'elles contiennent en outre un acide organique qui renforce l'efficacité du "dérochage", en particulier, lorsque les lichens et mousses sont accrochés sur des substrats calcaires, facilitant ainsi leur élimination.

Les acides organiques susceptibles d'être utilisés dans le cadre de l'invention sont choisis par ordre d'efficacité parmi l'acide gluconique, l'acide propionique, l'acide lactique, l'acide acétique, l'acide formique, l'acide citrique ou l'un de leurs sels.

Les compositions de la présente invention contiennent, de préférence, de 0,5 à 5 % en poids d'un acide organique ou d'un de leurs sels.

Une composition préférée ainsi préparée selon invention comprend le glycérol en mélange avec 0,5 à 5 % en poids d'acide gluconique ou un de ses sels, de préférence le gluconate de sodium.

Le glycérol et/ou les compositions en contenant, objets de la présente invention sont utiles pour traiter en particulier les lichens qui appartiennent de façon non limitative au groupe constitué des lichens crustacés, des lichens filamenteux, des lichens buissonnants et/ou des lichens gélatineux.

On pourra citer à titre d'exemples la Parmélie des murailles (*xanthoria parietina*), la *Caloplaca marina,* l'Acarospore *(Acarospora chlorophana),* la Parmélie grise *(hypogymnia physodes),* la Parmélie manteau *(parmelia caperata),* la *Parmelia sulcata,* les lichens foliacés *(physcia),* la Parmélie couperose *(parmelia acetabulum),* les lichens crustacés *(lecanora), l'Aspicilia contorta,* la *Xanthoparmelia,* la *Rhizoplaca chrysoleuca* et la *Rhizoplaca melanophthera.*

De la même manière, les mousses pouvant être traités par le glycérol et/ou les compositions de la présente invention appartiennent de façon non limitative aux groupes constitués des Leucobryum, des Bryum , des Mnium, des Andréales et des Sphagnales.

Selon un autre aspect, l'invention concerne encore un procédé de traitement d'une surface recouverte de mousses et de lichens, utilisant le glycérol.

Le procédé selon l'invention destiné à l'élimination des mousses et lichens consiste généralement à appliquer une composition contenant de 99% à 20% en poids de glycérol sur une surface notamment de façon manuelle ou mécanique (à l'aide d'un pulvérisateur basse pression).

La quantité de produit anti-mousse et/ou anti-lichen à utiliser dépend de la surface et de la densité de mousses et/ou de lichens présents sur la surface à traiter.

Généralement, 1 litre d'une composition à base de glycérol est suffisant pour traiter une surface de 5 à 20 m².

On laisse ensuite agir la composition ainsi appliquée pendant une période de 24 à 48 heures.

Il n'est pas utile de procéder à un nettoyage grossier (à l'aide d'une brosse ou d'une spatule) de la surface à traiter avant d'appliquer le produit.

On a constaté que l'élimination des mousses et des lichens selon l'invention est facilitée par des conditions climatiques ensoleillées.

La pluie est donc un facteur défavorable au procédé de traitement d'une surface contaminée par les lichens et/ou les mousses selon invention.

On peut renouveler le traitement périodiquement selon l'exposition des supports.

Le temps d'action de la composition selon l'invention est compris entre 24 et 48 heures, et de préférence 24 heures.

On obtient une élimination naturelle des mousses et des lichens plus ou moins rapide. La vitesse d'élimination sera fonction des conditions atmosphériques (vent et lessivage par la pluie) et variera de quelques jours à quelques semaines.

On peut également éliminer ces végétaux par un brossage léger.

Le procédé selon l'invention peut-être mis en oeuvre sur différentes surfaces parmi lesquelles on citera notamment le ciment, le béton, l'ardoise, la pierre, les tuiles et les surfaces de courts de tennis ou de piste d'athlétisme.

L'invention est illustrée plus en détail dans les exemples non limitatifs suivants.

### EXEMPLE 1

### Compositions à base de glycérol destinée à éliminer les mousses/et ou les lichens

| | | | |
|---|---|---|---|
| Formulation 1 | | | |
| | - glycérol | : | 65 % |
| | - Eau | : | 35 % |
| | | | |
| Formulation 2 | | | |
| | - glycérol | : | 50 % |
| | - Acide gluconique | : | 5 % |
| | - Polyoxyéthylène 2-éthyl hexyl éther | : | 2 % |
| | - Eau | : | 43 % |
| | | | |
| Formulation 3 | | | |
| | - Glycérol | : | 50 % |
| | - Gluconate de sodium | : | 5 % |
| | - Polyoxyéthylène 2-éthyl hexyl éther | : | 2 % |
| | - Eau | : | 43 % |
| | | | |
| Formulation 4 | | | |
| | - Glycérol | : | 50 % |
| | - Gluconate de sodium | : | 5 % |
| | - Dioctyl sulfosuccinate de sodium | : | 0,2 % |
| | - Eau | : | 44,8 % |
| Formulation 5 | | | |
| | -Glycérol | : | 50 % |
| | - Gluconate de sodium | : | 5 % |
| | - Lauryl éther sulfate de sodium | : | 1 % |
| | - Eau | : | 44% |
| | | | |
| Formulation 6 | | | |
| | - Glycérol | : | 50 % |
| | - Acide propionique | : | 1 % |
| | - Polyoxyéthylène 2-éthyl hexyl éther | : | 2 % |
| | - Eau | : | 47 % |
| | | | |
| Formulation 7 | | | |
| | - Glycérol | : | 20 % |
| | - Acide propionique | : | 2 % |
| | - Polyoxyéthylène 2-éthyl hexyl éther | : | 3 % |
| | - Eau | : | 75 % |

### EXEMPLE 2

Les propriétés des compositions conformes à la présente invention ont été mises en évidence en effectuant l'expérience décrite ci-après.

### Expérience N°1

Mise en évidence d'effet anti-mousses et anti-lichens des compositions à base de glycérol.

On prépare tout d'abord une composition anti-mousses et/ou anti-lichens en solubilisant la quantité requise de glycérol dans l'eau à une température ambiante, dans un récipient adapté, pour avoir une solution contenant 99%, 65% et 20% en poids de glycérol.

La composition anti-mousses et/ou anti-lichens est maintenue à cette même température dans un récipient muni d'une buse afin de pouvoir pulvériser le produit sur une surface verticale ou horizontale.

La composition contenant le glycérol est appropriée pour une utilisation immédiate ou une conservation de longue durée.

On applique selon le procédé de l'invention, une quantité suffisante de composition anti-mousses et/ou anti-lichens contenant 99%, 65% et 20% en poids de glycérol avec ou sans acide gluconique, sur 3 surfaces différentes recouvertes de lichens crustacés, de lichens gélatineux et de mousses.

Pour la série des 3 traitements, des observations visuelles ont été effectuées périodiquement après le traitement avec les compositions de glycérol décrites, puis à intervalle régulier pendant 3 semaines.

### Résultats :

Pour les lichens gélatineux, après 5 jours, on obtient une élimination presque complète des thalles verts recouvrant la surface traitée avec toutes les compositions à base de glycérol avec ou sans détergent.

Pour les lichens crustacés, on observe un changement de couleur des thalles (du jaune au verdâtre, brun) après 17 heures de traitement avec toutes les compositions à base de glycérol avec ou sans détergent.

Pour les mousses, on observe un brunissement 4 jours après le traitement avec toutes les compositions à base de glycérol avec ou sans détergent.

On constate dans un délai compris entre 24 heures et 48 heures, un changement d'aspect des mousses et des lichens comparativement aux mousses et lichens non traités. La couleur des mousses et des lichens passent du vert au marron clair, puis au marron foncé. A ce dernier stade les mousses et les lichens se détachent progressivement de leur support.

On obtient une élimination des mousses et des lichens sans aucune action mécanique dans le temps. Toutefois, on peut accélérer cette élimination par un balayage mécanique ou un passage au jet d'eau. On n'observe aucune repousse des mousses et des lichens 3 mois après leur élimination.

### Conclusion

Le glycérol pur est efficace pour l'élimination des mousses et/ou lichens. Le glycérol peut être dilué jusqu'à 20% sans perdre son activité anti-mousses et/ou anti-lichens.

Une composition contenant 5% d'acide gluconique et 95% de glycérol est légèrement plus active que le glycérol pur sur les lichens crustacés. Aucune amélioration n'a été démontrée entre la solution contenant 20 ou 65% de glycérol et le glycérol pur (99% en poids) pour l'élimination des lichens gélatineux.

D'une manière générale, on observe une amélioration de l'élimination des mousses et/ou lichens en utilisant une composition contenant du glycérol et un acide organique ou un de sels.

## Revendications

1. Utilisation d'une composition aqueuse contenant de 20 % à 99 % en poids de glycérol comme agent anti- mousses et/ou anti-lichens.

2. Utilisation selon la revendication 1, **caractérisée en ce que** le pH de la composition précitée, est compris entre 5 et 9.

3. Utilisation selon la revendication 1 ou 2, **caractérisée en ce que** la composition comprend du glycérol en mélange avec un agent tensioactif choisi parmi les alcools éthoxylés, en particulier le polyoxyéthylène 2-éthyl hexyl éther, le dioctylsulfosuccinate de sodium, le lauryl éther sulfate et les alkyls polyglucosides (chaîne en C₈).

4. Utilisation selon l'une des revendications 1 à 3, **caractérisée en ce que** la composition comprend un acide organique choisi parmi l'acide gluconique, l'acide propionique, l'acide lactique, l'acide acétique, l'acide formique, l'acide citrique ou un de leurs sels.

5. Utilisation selon la revendication 4, **caractérisée en ce que** l'acide organique est l'acide gluconique ou un de ses sels.

6. Utilisation selon la revendication 5, **caractérisée en ce que** le sel d'acide organique est le gluconate de sodium.

7. Utilisation selon l'une des revendications 1 à 6, **caractérisée en ce que** la composition contient de préférence du glycérol technique à 65%.

8. Utilisation selon l'une des revendications 1 à 7, **caractérisée en ce que** les mousses sont choisies dans le groupe constitué des Leucobryum, des Bryum , des Mnium, des Andréales et des Sphagnales.

9. Utilisation selon l'une des revendications 1 à 7, **caractérisée en ce que** les lichens sont choisis dans le groupe constitué des lichens crustacés , des lichens filamenteux, des lichens buissonnants ou des lichens gélatineux.

10. Procédé de traitement d'une surface recouverte de mousses et de lichens **caractérisé en ce qu'**on applique sur ladite surface, une composition aqueuse contenant de 99% à 20% en poids de glycérol.

11. Procédé de traitement d'une surface selon la revendication 10, **caractérisé en ce que** ladite surface est choisie parmi le ciment, le béton, l'ardoise, la pierre, les tuiles et les surfaces de courts de tennis ou de piste d'athlétisme.

12. Procédé de traitement d'une surface selon la revendication 10 ou 11, **caractérisé en ce que** :
- on applique une quantité suffisante de la composition destinée à éliminer les mousses et/ou les lichens, de façon manuelle ou mécanique (au pulvérisateur basse pression),
- on laisse agir la composition pendant une période de 24 à 48 heures sans pluie.

## Claims

1. Use of an aqueous composition containing 20% to 99% by weight of glycerol as an anti-moss and/or anti-lichen agent.

2. Use according to claim 1 **characterised in that** the pH of the above mentioned composition is between 5 and 9.

3. Use according to claim 1 or 2 **characterised in that** the composition comprises glycerol mixed with a surfactant selected from ethoxylated alcohols, particularly polyoxyethylene 2-ethylhexyl ether, sodium dioctylsulfosuccinate, lauryl ether sulfate and alkyl polyglucosides (C₈ chain).

4. Use according to one of claims 1 to 3 **characterised in that** the composition comprises an organic acid selected from gluconic acid, propionic acid, lactic acid, acetic acid, formic acid, citric acid or one of their salts.

5. Use according to claim 4 **characterised in that** the organic acid is gluconic acid or one of its salts.

6. Use according to claim 5 **characterised in that** the organic acid salt is sodium gluconate.

7. Use according to one of claims 1 to 6 **characterised in that** the composition preferably contains 65% technical-grade glycerol.

8. Use according to one of claims 1 to 7 **characterised in that** the mosses are selected from the group comprising Leucobryum, Bryum, Mnium, Andreales and Sphagnales.

9. Use according to one of claims 1 to 7 **characterised in that** the lichens are selected from the group comprising crustaceous lichens, filamentous lichens, bushy lichens and gelatinous lichens.

10. A process for the treatment of a surface covered with mosses and lichens, **characterised in that** an aqueous composition containing from 99% to 20% by weight of glycerol is applied to said surface.

11. The process for the treatment of a surface according to claim 10, **characterised in that** said surface is selected from cement, concrete, slate, stone, tiles and the surfaces of tennis courts or athletics tracks.

12. The process for the treatment of a surface according to claim 10 or 11, **characterised in that** :
- a sufficient amount of the composition for removing the mosses and/or lichens is applied manually or mechanically (with a low-pressure sprayer),
- the composition is allowed to act for a period of 24 to 48 hours without rain.

## Patentansprüche

1. Verwendung einer wäßrigen Zusammensetzung, die zwischen 20 und 99 Gew.-% Glycerin als Moos- und/oder Flechtenschutzmittel enthält.

2. Verwendung nach Anspruch 1, **dadurch gekennzeichnet, daß** der pH-Wert der vorgenannten Zusammensetzung zwischen 5 und 9 liegt.

3. Verwendung nach Anspruch 1 oder 2, **dadurch gekennzeichnet, daß** die Zusammensetzung Glycerin in Mischung mit einem oberflächenaktiven Mittel, ausgewählt aus den ethoxylierten Alkoholen, insbesondere Polyoxyethylen-2-Ethylhexylether, Natriumdioctylsulfosuccinat, Laurylethersulfat und Alkylpolyglucosiden (C₈-Kette) enthält.

4. Verwendung nach einem der Ansprüche 1 bis 3, **dadurch gekennzeichnet, daß** die Zusammensetzung eine organische Säure ausgewählt aus Gluconsäure, Propionsäure, Milchsäure, Essigsäure, Ameisensäure, Zitronensäure oder einem ihrer Salze enthält.

5. Verwendung nach Anspruch 4, **dadurch gekennzeichnet, daß** die organische Säure Gluconsäure oder eines ihrer Salze ist.

6. Verwendung nach Anspruch 5, **dadurch gekennzeichnet, daß** das Salz der organischen Säure Natriumgluconat ist.

7. Verwendung nach einem der Ansprüche 1 bis 6, **dadurch gekennzeichnet, daß** die Zusammensetzung vorzugsweise 65%iges technisches Glycerin enthält.

8. Verwendung nach einem der Ansprüche 1 bis 7, **dadurch gekennzeichnet, daß** die Moose aus der Gruppe bestehend aus Leucobryum, Bryum, Mnium, Andreales und Sphagnales ausgewählt sind.

9. Verwendung nach einem der Ansprüche 1 bis 7, **dadurch gekennzeichnet, daß** die Flechten aus der Gruppe bestehend aus Krustenflechten, Fadenflechten, Strauchflechten oder Gallertflechten ausgewählt sind.

10. Verfahren zur Behandlung einer moos- und flechtenbedeckten Fläche, **dadurch gekennzeichnet, daß** auf die Fläche eine zwischen 99 und 20 Gew.-% Glycerin enthaltende wäßrige Zusammensetzung aufgetragen wird.

11. Verfahren zur Behandlung einer Fläche nach Anspruch 10, **dadurch gekennzeichnet, daß** die Fläche aus Zement, Beton, Schiefer, Stein, Ziegeln sowie Flächen von Tennisplätzen oder Leichtathletikbahnen ausgewählt ist.

12. Verfahren zur Behandlung einer Fläche nach Anspruch 10 oder 11, **dadurch gekennzeichnet, daß**:
- eine ausreichende Menge der Zusammensetzung zur Beseitigung der Moose und/oder der Flechten manuell oder mechanisch (mittels Niederdruckzerstäuber) aufgetragen wird,
- man die Zusammensetzung über einen regenfreien Zeitraum von 24 bis 48 Stunden wirken läßt.
